# EUROPEAN PATENT SPECIFICATION

(11) **EP 1 553 888 B1**
(45) Date of publication and mention of the grant of the patent: **17.02.2016**
(21) Application number: 03776493.3
(22) Date of filing: 20.10.2003
(51) Int. Cl.: A61C 5/02

(54) **ENDODONTIC INSTRUMENTS WITH PILOT TIPS AND PARABOLIC CUTTING FLUTES**
ENDODONTISCHE INSTRUMENTE MIT SPITZEN UND PARABOLISCHEN SCHNEIDEKEHLEN
INSTRUMENTS ENDODONTIQUES POSSEDANT DES POINTES PILOTES ET DES CANNELURES PARABOLIQUES

(30) Priority: 18.10.2002 US 419662 P
(43) Date of publication of application: 20.07.2005
(73) Proprietor: Buchanan, Stephen L., Santa Barbara, CA 93105 (US)
(72) Inventor: Buchanan, Stephen L., Santa Barbara, CA 93105 (US)
(74) Representative: Vleck, Jan Montagu
(86) International application number: PCT/US2003/033359
(87) International publication number: WO 2004/034920

(56) References cited:
- US-A- 4 299 571
- US-A- 4 611 508
- US-A- 4 836 780
- US-A- 4 850 867
- US-A- 4 850 867
- US-A- 5 855 479
- US-A- 5 855 479
- US-A- 5 947 730

## Description

### BACKGROUND OF THE INVENTION

### 1. Field of the invention

The present invention reflates generally to endodontic instruments and, more particularly, to cutting burs which are used in the creation of ideal access preparations into root canal systems of human teeth.

### 2. Description of the Related Art

A relatively common but difficult dental procedure is the entry into and the cleaning, shaping, and filling of root canals in human teeth that have become pathologic. In the performance of a root canal procedure, a hole is first cut in the crown or exposed portion of the tooth, typically either in the biting surface of the tooth, for posterior teeth, or in the side of the tooth on the interior of the jaw for incisor teeth.

The creation of ideal access form has been difficult with available cutting tools, specifically preparing an ideal entry path for handpiece-driven files to effortlessly enter root canals. Cutting the correct entry path is critical because without a relatively straight approach for these rotary files, they are prone to breakage due to cyclic fatigue. Another difficult aspect of endodontic therapy has been the creation of a smooth transition between each of the access line-angles and the canal orifices apical to them. Leaving an irregularity at this transition level makes every introduction of a file, paper point, or gutta percha point into the root canal a challenge. When the line angle of the access preparation drops smoothly into the canal the rest of the procedure is easier and more controlled.

Several solutions have been offered by manufacturers, such as Peezo burs which come in different configurations and access burs with no cutting flutes or diamond grit on the tip of the instrument,

Peezo burs come in different configurations, two with different degrees of parabolic flute silhouettes, and another with a pilot tip, a quarter-round flute-tip radius with parallel shank flutes. All of these burs have cutting flute lengths of around 6-8 mm. The advantages of these burs when used in access procedures are the funnel shapes they make into canals, and the pilot tip which prevents ledge formation. Unfortunately, the flute length of these burs is only half the height of most access preparations, several of the Peezo designs are able to ledge canals, and those that have pilot tips are limited in their use because these passive guides are not of the ideal dimension.

Access burs with pilot tips but without flutes or diamond grit at their ends are an improvement over those burs that can cut ledges in access and canal walls. These burs are quite limited in their use as they only cut sideways. What is needed is an access bur that has flutes the full length of the access cavity, that cuts aggressively in apical and lateral directions, that will not ledge, and will always follow the canal path. After the access preparation is completed and each of the root canals present in the tooth is located and negotiated, small endodontic instruments known generally as root canal files are then used to clean out the material present in the root canal, and to impart a specific shape to the root canal so that filling material may be inserted into the root canal to seal it. However, many problems can occur during this process.

Most common is the uncontrolled transportation of the original canal path. This occurs with traditional root canal files having aggressive tip geometry, as described by Roane patent 4,536,159, as well as with other file designs such as those by McSpadden in patents 4,299,571 and 4,332,561, and in Maillefer et al. patent 5,658,145. Files with passive radiussed tip geometries, such as those described by Buchanan in previous patents, such as 4,836,780, 5,752,825, 5,836,764, 5,842,861, 5,897,316, and 5,921,775 faithfully follow the original canal path as they cut, but these safe file tips give up a certain amount of cutting efficiency to more aggressive designs. While clinicians initially react positively to the added cutting efficiency of these files, they find in a short time that apical lacerations can easily occur if length has been mis-determined or if the files are held at length for more than one second (Manufacturer's cautions in DFU).

Furthermore, there has been some concern that the relatively narrow apical shapes created by the files described by Buchanan might not clean the ends of root canals as well as a technique which enlarged the end of root canals more. The apical stop preparation apparently accomplished this but, as Weine showed-- "The Effect of Preparation Procedures on Original Canal Shape and on Apical Foramen Shape", Journal of Endodontics, vol. 1, No. 8, August 1985, pp. 225-262--it is difficult to create these larger apical shapes in root canals without damaging the root.

McSpadden, as disclosed in his patent 4,299,571, designed a pilot tip for root canal files which attempted to resolve this problem. Unfortunately, the pilot tips of this design were 3mm long and the cutting flutes behind them had a small .02mm/mm taper. The function of this file concept was limited because the pilot tip often bound in the canal before the flutes contacted the canal wall, so larger shapes were impossible with these files.

US patent number US5876202 to Berlin provides a tool having a penetrating end for the removal of material, such tool being mobile around a rotation axis passing through said penetrating end and being further provided with evacuation means comprising at least one peripheral undercut or flute for the material removed.

US patent publication number US2002/0037940 to Oyamada et al. provides a dental diamond bur to be mounted in a dental handpiece, which is said to be suitable for cutting safely and precisely a hard tissue of tooth, from which a tectorium portion thereof has been removed for the purposes of exposure and opening of an occlusal surface side of a pulp chamber filled with a dental pulp, within a short period of time, prior to a root canal treatment such as treatment of pulp removal, enlargement of a root canal, and filling medicine, in the dental remedy.

### SUMMARY OF THE INVENTION

The invention provides an access bur as defined in independent claim 1 to which reference should now be made. Some preferred features of the invention are defined in the dependent claims to which reference should also now be made.

Preferred embodiments of the present invention is to allow faster and safer cutting tools to enter and shape root canals. This is realized primarily through a design logic incorporating sophisticated pilot tip geometry, parabolic cutting flutes in the region behind the pilot tip (referred to herein as the"alpha"or a region), and flutes of a consistent length and lesser taper comprising the region (referred to herein as the beta"or P region) between the alpha region and the shank. This design concept is applied to access preparation burs, to initial enlargement files, and to finishing files.

Files disclosed in my prior application, Ser. No. 10/630,028, are provided with two distinct degrees of taper for the two portions of each file. I contemplate additional groups of multi-taper files where the taper at the tip is one value, the taper of the flute portion adjacent the shank is another value, and there is a gradual but continuous change from one value to the other with distance from the tip. In other words, files of these groups, are not limited to two fixed tapers for corresponding sections of the flute but rather the change of taper from tip to shank portion occurs over a radius. I refer to these types of files in which the change of taper occurs over a radiussed section as parabolic files. These are incorporated in my parabolic system of endodontic implements.

Files of the type described herein are improved significantly if they are provided with a radiussed pilot tip. Parabolic shaping files with radiussed pilot tips are far safer by virtue of the radiussed tip and are virtually guaranteed to eliminate the danger of ledging in a root canal.

The radiussed pilot tips of different parabolic shaping files in a set can be 1 mm in length and have eight different diameters, taken at the 1 mm point, for eight different parabolic shaping files. The alpha taper section behind the non-cutting pilot tip is 3 mm in length and has a 0.10 mm/mm slope for all files of this parabolic file system. The beta taper which extends to the shank is 12 mm in length and has a 0.05 mm/mm angle or slope for all files. With a 1 mm pilot tip length, an alpha length of 3 mm, and a shank length of 12 mm, all instruments have the traditional 16 mm limit to the shank-end fluted portion. These are provided in hand and handpiece-driven versions, with the hand files made in both lefthand and right-hand flute directions.

Various critical dimensions for these parabolic shaping files are set out in the following Table I. The dimensions are given in millimeters.

**TABLE I**

| (In millimeters) | | |
|---|---|---|
| D1 | D4 | D16 |
| .1 | .4 | 1.05 |
| .2 | .5 | 1.15 |
| .3 | .6 | 1.25 |
| .4 | .7 | 1.35 |
| .6 | .9 | 1.55 |
| .8 | 1.1 | 1.75 |
| 1.0 | 1.3 | 1.95 |
| 1.3 | 1.6 | 2.25 |

D1 is the diameter at 1 mm from the end of the file. D4 is the diameter at 4 mm from the end (3 mm from the tip). D16 is the diameter at 16 mm from the end (15 mm from the tip).

For negotiating instruments, the parabolic negotiating files are simpler and fewer in number than the parabolic shaping files described above. These are provided in tip diameters of .06 mm, .08 mm, .10 mm, and .15 mm and all have 16 mm of .02 mm/mm tapered flute length. A second series incorporates variable tapers between files and some different tip diameters; specifically a 075-.02, a 10-.03, a 15-.04, and a 20-.05. Both series have the unique radiussed pilot tips and can be provided as either hand or rotary files.

The pilot tips on this family of instruments are distinguished by their fully-radiussed geometry which absolutely prevents the ledging of canals and their use-specific designs which allow unique functionality. While all of the instruments in this set of tools have pilot tips, alpha parabolas, and beta tapers, each of the three sets of instruments has a different function and therefore requires a different concept and sizing of pilot tips. In the access burs, the pilot tips vary by increments relating to coronal canal diameters in small, medium, and large roots; 0.2, 0.3, and 0.4 mm. These pilot tips become proportionally longer as the diameter increases between sizes. This helps prevent dangerous over-extension into curved canals.

In the initial enlargement files, the pilot tips are all .2 mm in diameter by 1 mm in length because they are designed to track the guidepath cut by the #15 negotiating file taken to length as prerequisite to rotary shaping. Because of the tracking function of these pilot tips, aggressive cutting flutes and relatively high speeds can be used in these files without forsaking safety.

In the finishing files, the pilot tips are again different as they are designed to self-gauge terminal canal diameters to tell dentists when the final shaping objective has been achieved. The shape is finished when the pilot tip of the finishing file matches the terminal diameter of the canal being shaped. The dentist finds out that the shape is finished when the next larger finishing file in the series refuses to move to full length in the canal because its larger pilot tip binds the terminus of the canal.

The parabolic flute shapes come immediately off of the cylindrical shank-end of the pilot tip and end a set distance back (typically 3-5 mm) between files in each of the series. The parabolic shape could be roughly described as a .10 taper with a radiussed bulge between points such that the shank end of the alpha region is tangential to the immediately adjacent beta profile. This is the parabolic alpha region of cutting flutes, and is expressly designed to cut shapes that funnel files and filling materials into and through the canal, ultimately to its terminus.

Behind this parabolic alpha zone is the beta region. This includes a flute pattern of consistent length and taper between files in each common series. In the preferred embodiment these flute portions have a .05 taper on the access burs and finishing files to impart a subtle taper to access line angles and coronal canal shapes. The initial enlargement files are different as their beta regions are parallel in shape and the flutes are dulled. This allows just their sharp alpha regions to cut safely around curvatures while the non-cutting beta region passively follows and augers out cut debris.

In the preferred embodiment, the access burs are made in rigid stainless steel or carbon steel. There is an alternate design which has diamond grit plated onto their alpha and beta regions. In the preferred embodiment, the initial enlargement files and the finishing files are made of nickel titanium alloy. All of these instruments, of whatever material, may be treated with hardening agents such as, but not limited to, titanium nitrite.

The access burs are intended to cut apically with their parabolic tip flutes when they are pushed into a canal orifice, as their pilot tips track the canal. The side-cutting flute design comes to play then as the bur is tipped up to the access line angle, cutting a straight-line entry path for all instruments and materials to follow. These burs are used at speeds of 5,000-20,000 RPM.

The initial enlargement files are preferably made of nickel titanium alloy and are used at 1200-1500 RPM to quickly cut a coronal shape in root canals. Each of the three files in this series has the same pilot tips with .2 mm diameters so they track the previously negotiated canal with their sharp parabolic tip flutes and they all have tapered non-cutting beta flutes to prevent the instruments from cutting into the inside of coronal canal curvatures.

The finishing series of parabolic files are also made of nickel titanium alloy but are used at slower speeds, approximately 300 RPM, as they are taken to the end of the canal being prepared. These instruments have pilot tips of varying sizes, sharp parabolic alpha flutes and sharp beta flutes with a .05 mm/mm taper, just enough canal shape to allow ease of entry and narrow enough to be safe in the smallest, most curved roots. These finishing files cut the larger apical preparations desired by many clinicians, an apical stop preparation albeit with a safe apical radius rather than the problematic ledgeform of traditional stop preparations.

The series of finishing files ratchet up in tip diameter in different intervals, small increments in between the smaller sizes of files used in challenging narrow canals and bigger jumps in tip diameter in the larger sizes of files, thus addressing a very wide range of apical canal diameters in as few as eight sizes total.

### BRIEF DESCRIPTION OF THE DRAWINGS

A better understanding of the present invention may be realized from a consideration of the following detailed description, taken in conjunction with the accompanying drawings.

The instruments depicted in Figures 5A and 5B are embodiments of the present invention. The instruments depicted in Figures 1 to 4 and 6 to 14 are not part of the present invention.

In the Figures:
FIG. 1 shows a plurality of three parabolic files divided into alpha and beta sections;
FIG. 2 is a view of one particular file and shows a pilot tip at the end of the alpha portion;
FIG. 3 is an enlarged view of the alpha portion and pilot tip of a file like FIG. 2 showing a modification thereof;
FIG. 4 shows files like those of FIG. 1 but with pilot tips provided in shapes corresponding to the parabolic outlines that extend outwardly, away from the terminus of the tips;
FIG. 5A is a view of three different burs in sizes small, medium and large with alpha and beta portions and pilot tips extending from the alpha portion;
FIG. 5B is a schematic view showing a cross-section of a bur of FIG. 5A;
FIG. 6A is a view like that of FIG. 1, but with pilot tips extending from the depicted alpha portions;
FIG. 6B shows a set of eight files with dimensions corresponding to what is set out in Table I above;
FIGS. 7A-7D are schematic views of a first group of parabolic files wherein the file does not have a pilot tip;
FIGS. 8A-8D are schematic views of another group of multi-taper files wherein the file does not have a pilot tip;
FIGS. 9A-9D are schematic views of still another group of multi-taper files wherein the file does not have a pilot tip;
FIGS. 10A-10D are schematic views of yet another group of multi-taper files wherein the file does not have a pilot tip;
FIG. 11 is an enlarged view, represented schematically, of one particular file of my parabolic file system which would also have a gradual and continuous change from the α region to the β region;
FIG. 12 is a diagrammatic representation of a tip portion of the file of FIG. 11;
FIG. 13 shows two schematic views of a file in a curved root canal with the file bending to follow the contour of the canal; and
FIG. 14 depicts schematically three burs.

### DESCRIPTION OF THE PREFERRED EMBODIMENTS

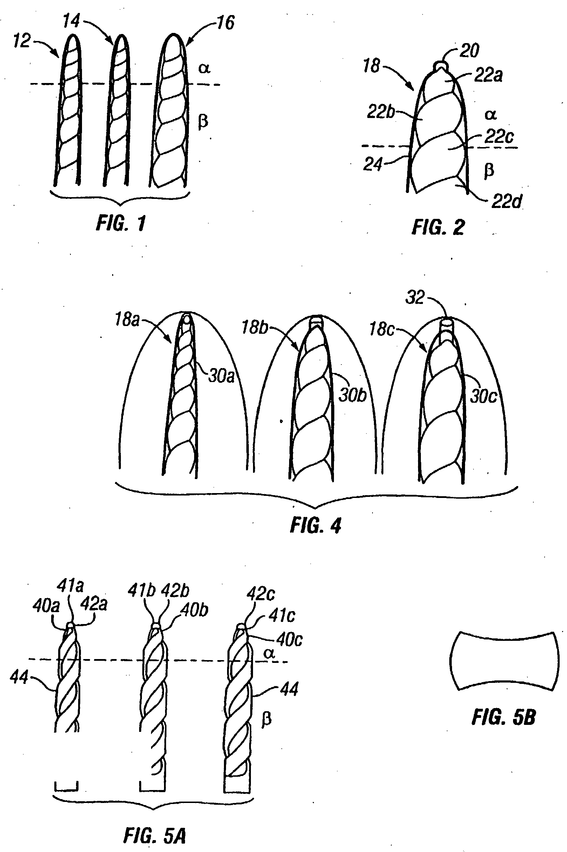

FIG. 1 shows three tapered dental files 12, 14 and 16, in different sizes and each being divided into α and β sections. These represent multi-taper files of my prior Application Ser. No. PCT/US02/03516. The files disclosed in that application include two distinct taper angles in the α and β sections with a definite change in angle occurring at the α-β juncture point.

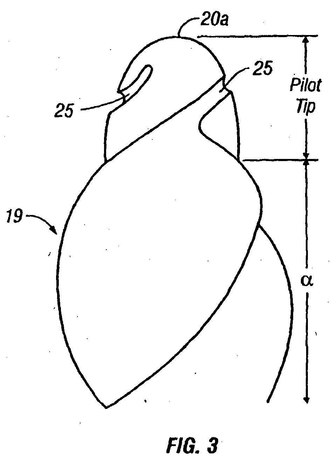

FIGs. 2 and 3 schematically represent different embodiments of files. FIG. 2 depicts one particular file 18 having a pilot tip 20 and cutting flutes 22a-22d. The changes of taper angle from one cutting flute to the next are continuous in the form of a parabolic curve, indicated by the outline 24. The α and β portions of the file have different taper angles, and the change of taper from the α portion to the β portion is continuous over a radiussed curve shape.

FIG. 3 shows an enlargement of the pilot tip and α portions of a file 19, similar to that of FIG. 2. The pilot tip 20a is fully radiussed through 180 degrees, presenting a smooth surface at the forward end of the file which develops a guide path for the file and permits entry of the file into the root canal while avoiding ledging in the canal. The pilot tip 20a of the file 19 is provided with a spiral flute space 25 which serves to capture debris near the cutting edge of the file and remove it from the cutting tip. This spiral flute 25 has a non-cutting geometry.
These views represent a small diameter file 18a creating a pilot opening in the root canal.

FIG. 4 illustrates finishing files 18a, 18b and 18c of different sizes inserted into root canals 30a-30c. A smaller size file 18a makes the initial cut into the root canal. File 18b is of a larger size chosen to finish the root canal to its apical depth. File 18c is shown following the guide path cut by the file 18b but, because it is somewhat larger in diameter, it binds in the canal before reaching the terminal shape 32 which was cut by the pilot tip of the file 18b.

FIG. 5A depicts a set of three access burs of different sizes, each having an α portion and a β portion, and designated small, medium and large. These access burs range from 40a in a small size through 40b, medium, and 40c, large. The access burs 40 are shaped to cut apically with the parabolic tip flutes 42a, 42b and 42c when inserted into a canal orifice, as the pilot tips 41a, 41b and 41c track the root canal. Side-cutting flutes 44 are of a fixed taper angle in order to cut a straight-line entry path for all instruments and materials to follow.

FIG. 5B is an enlarged cross-sectional view of the access burs as shown in FIG. 5A..

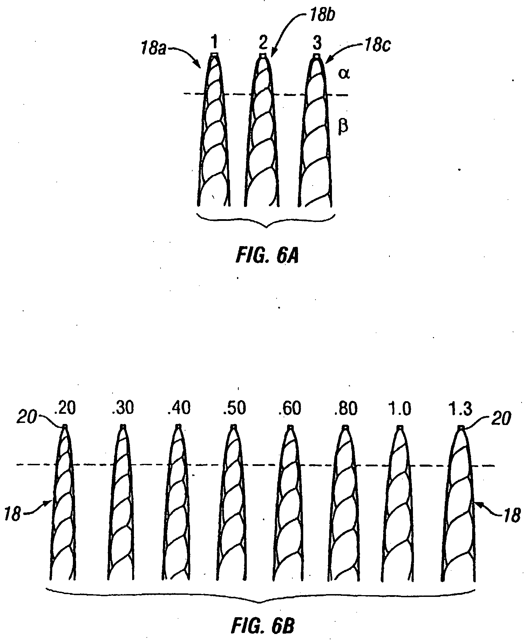

FIG. 6A shows the α and β portions of the parabolic files 18a, 18b and 18c of FIG. 4.

FIG. 6B shows a series of eight finishing files 18, all of different sizes and being parabolic in shape. In these files, the pilot tips 20 are of various sizes, corresponding to the size of the file 18. The size of these files of FIG. 6B range from .20 to 1.30 mm in diameter.

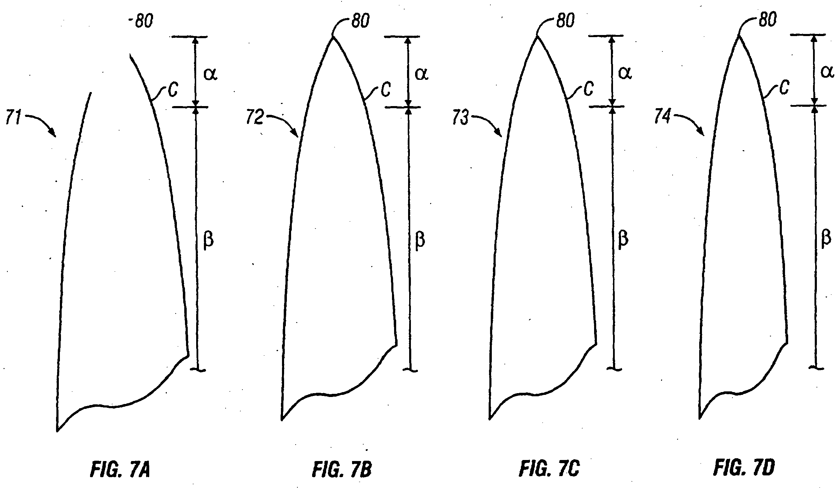

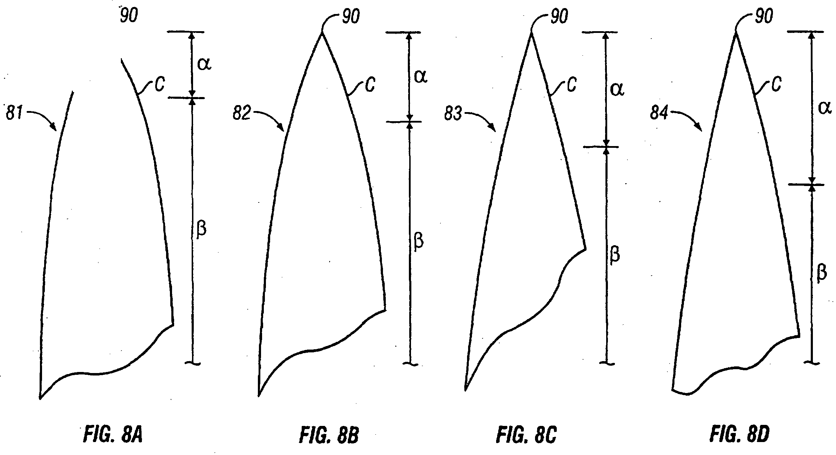

FIGS. 7A-7D schematically represent sets of four multi-tapered files 71, 72, 73 and 74. Each of the files is shown with a first portion α adjacent the tip 80 and a second portion β remote from the tip, extending back to the shank, not shown. The portions α and β have different tapers in the same file and the taper in the first portion also varies from file to file. In file 71 the taper of the first portion is 0.12. In file 72, the taper of the first portion is 0.10. In file 73, the taper of the first portion is 0.08. In file 74, the taper of the first portion is 0.06. In a first set of files represented by FIGS. 7A-7D, the taper of the second portion β is 0.02 mm/mm. In a second set of files, also represented by the drawings of FIGS. 7A-7D, the taper of the second portion β is 0.04 mm/mm. The files of FIGS. 7A-7D are discussed hereinabove. These and the remaining files of FIGS. 8-10 are provided with a radiussed surface in which the change of taper occurs gradually with distance from the tip from the taper of the first portion to the taper of the second portion. This is shown by the curve in the region C of FIGS. 7-10.

FIGS. 8A-8D schematically represent still another pair of sets of files. FIGS. 8A-8D show files 81, 82, 83 and 84 in a multi-tapered configuration. In each of the files 81-84, there is a first portion α adjacent the tip 90 and a second portion β remote from the tip, extending to the shank. In these sets of files, each of the first portions is a different length from those of the other first portions, being shortest for the file 81 which has the greatest taper of the first portion α (0.12) and increasing successively for files 82, 83 and 84 as the taper of the first portion diminishes, beginning at 0.10 for file 82 and ending with 0.06 for file 84.

As with the sets of files of FIGs. 7A-7D, one set of files 81-84 has a taper of 0.02 mm/mm for the second portion β whereas another set has a taper of 0.04 mm/mm for the second portion β.

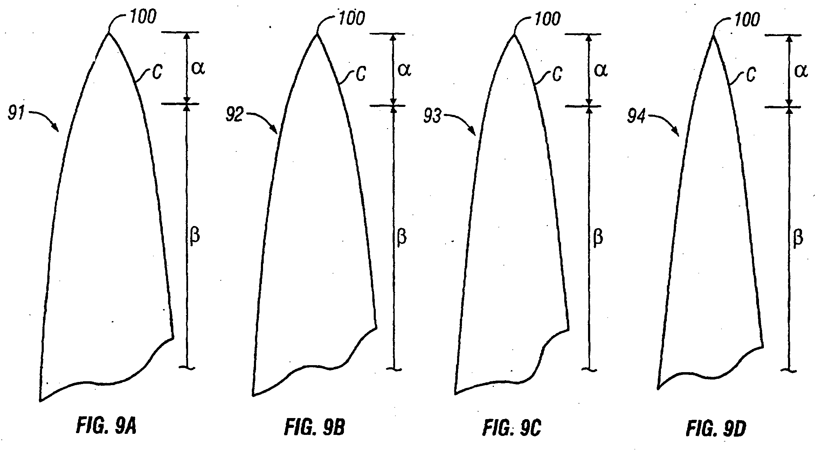

FIGS. 9A-9D schematically represent another set of four multi-tapered files 91, 92, 93 and 94.

Each of the files is shown with a first portion α adjacent the tip 100 and a second portion β remote from the tip, extending back to the shank, not shown. The portions α and β have different tapers in the same file and the taper in the first portion also varies from file to file. In file 91 the taper of the first portion is 0.12. In file 92, the taper of the first portion is 0.10. In file 93, the taper of the first portion is 0.08. In file 94, the taper of the first portion is 0.06.

In these files 91-94, the taper of the second portion varies from file to file, increasing in taper as the taper of the first portion reduces. For the file 91, the taper of the second portion is 0.01 mm/mm; for the file 92, it is 0.02; for the file 93 it is 0.03; and for the file 94 the taper of the second portion is 0.04 mm/mm.

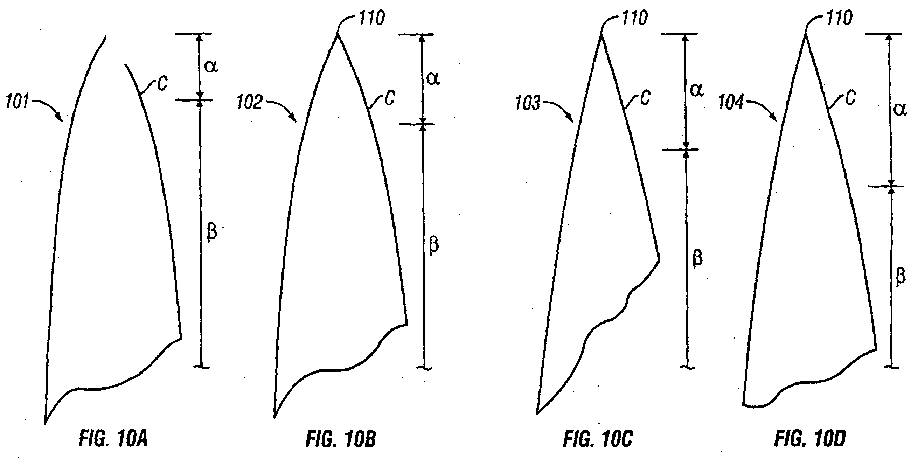

FIGS. 10A-10D schematically represent still another set of files. FIGS. 10A-10D show files 101, 102, 103 and 104 in a multi-tapered configuration. In each of the files 101-104, there is a first portion α adjacent the tip 100 and a second portion β remote from the tip, extending to the shank. In this set of files, each of the first portions is a different length from those of the other first portions, being shortest for the file 101 which has the greatest taper of the first portion α (0.12) and increasing successively for files 102, 103 and 104 as the taper of the first portion diminishes, beginning at 0.12 for file 102 and ending with 0.06 for file 104.

In these files 101-104, the taper of the second portion varies from file to file, increasing in taper as the taper of the first portion reduces. For the file 101, the taper of the second portion is 0.01 mm/mm; for the file 102, it is 0.02; for the file 103 it is 0.03; and for the file 104 the taper of the second portion is 0.04 mm/mm.

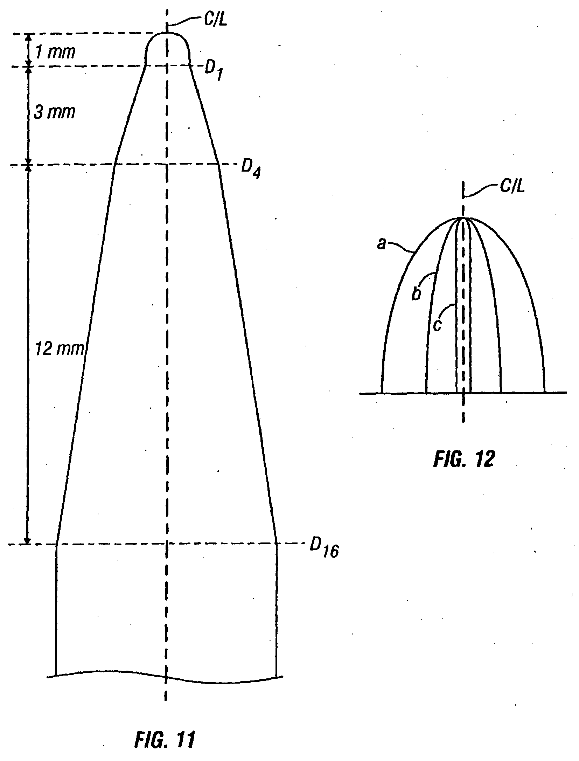

The file depicted in enlarged form in FIG. 11 has diameters D1, D4, and D16, as well as the indicated length dimensions, corresponding to what is set forth in Table I. The file of figure 11 would of course also have the gradual and continuous transition between the two different degrees of taper is the first portion α and second portion β. FIG. 12 represents various parabolic curves a, b, and c for the pilot tips of different files.

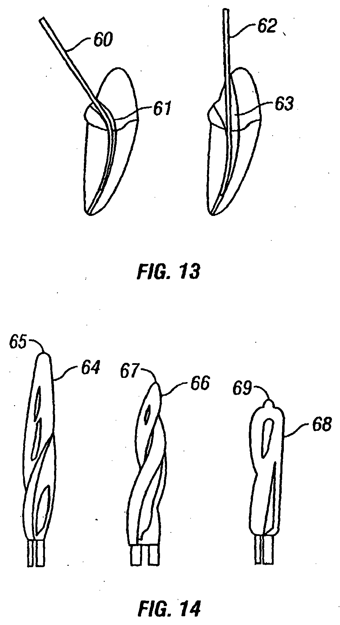

FIG. 13 shows a pair of files 60 and 62 inserted in root canals of different shapes in two different teeth. File 60 is shown inserted into a root canal 61. File 62 is inserted into a root canal 63. The root canal 61 is more curved than the root canal 63 with the related file 60 assuming a corresponding shape in root canal 61 whereas the file 62 is relatively straight and the root canal 63 is more open at its proximal end than is the root canal 61.

FIG. 14 depicts a set of access burs 64, 66 and 68 of different shapes and sizes. However, each is provided with a pilot tip: 65 for bur 64; 67 for bur 66: and 69 for bur 68. Access burs 64 and 66 each have a parabolic shape extending rearward from the pilot tip.

Although there have been described hereinabove various specific arrangements of a ENDODONTIC INSTRUMENTS WITH PILOT TIPS AND PARABOLIC CUTTING FLUTES in accordance with the invention for the purpose of illustrating the manner in which the invention may be used to advantage, it will be appreciated that the invention is not limited thereto. Accordingly, any and all modifications, variations or equivalent arrangements which may occur to those skilled in the art should be considered to be within the scope of the invention as defined in the annexed claims.

## Claims

1. An access bur (40) for use in cutting a root canal in apical and lateral directions, said bur comprising:
a round shank having a first diameter; and
a pilot tip (41 a, 41 b, 41 c) at an end of the bur remote from said shank, said pilot tip (41 a, 41 b, 41 c) having a second diameter which is smaller than said first diameter;
**characterised by**:
a tapered flute portion extending between said pilot tip (41a, 41b, 41c) and said shank, the tapered flute portion subdivided into a first, α, section adjacent the pilot tip and a second, β, section adjacent the shank, the α section being parabolic cutting flutes (42a, 42b, 42c) and the β section being side-cutting flutes (44) having a fixed taper angle for cutting a straight line entry path into the canal behind the pilot tip;
wherein the pilot tip (41 a, 41 b, 41 c) extends forwardly from the end of the α section for tracking the root canal as the bur is inserted to shape the canal.

2. The access bur of claim 1, wherein the bur (40) is fabricated of rigid stainless steel.

3. The access bur of claim 1, wherein the bur (40) is fabricated of rigid carbon steel.

4. The access bur of any of claims 1 to 3, wherein said pilot tip (41 a, 41 b, 41 c) presents a smooth surface to facilitate entry into a root canal without ledging therein.

5. The access bur of claim 4, wherein said pilot tip (41a, 41b, 41c) is hemispherical.

6. The access bur of any of the preceding claims, wherein the continuously tapering profile of the α section (42a, 42b, 42c) is in the form of a parabola.

7. The access bur of any of the preceding claims, wherein said material removing portion has at least one spiral cutting edge.

8. The access bur of any of claims 1 to 7, wherein said material removing portion has at least one abrasive surface.

9. A set of access burs (40a, 40b, 40c) for use in preparing a root canal comprising a plurality of access burs according to any of claims 1 to 8.

10. The set of access burs (40a, 40b, 40c) of claim 9, wherein the number of burs in said set is three.

11. The set of burs (40a, 40b, 40c) of claim 9 or 10, wherein each bur in said set (40a, 40b, 40c) has an α section taper profile different from the taper profile of the α section of the other burs in said set.

## Patentansprüche

1. Zugangsbohrer (40) zur Verwendung beim Schneiden eines Wurzelkanals in apikaler und lateraler Richtung, wobei der genannte Bohrer Folgendes aufweist:
einen runden Schaft mit einem ersten Durchmesser und
eine Führungsspitze (41a, 41b, 41c) an einem von dem genannten Schaft fernen Ende des Bohrers, wobei die genannte Führungsspitze (41a, 41b, 41c) einen zweiten Durchmesser hat, der kleiner als der genannte erste Durchmesser ist;
**gekennzeichnet durch**:
einen sich verjüngenden Kehlenteil, der zwischen der genannten Führungsspitze (41a, 41b, 41c) und dem genannten Schaft verläuft, wobei der sich verjüngende Kehlenteil in einen ersten, α-Abschnitt, der an die Führungsspitze angrenzt, und einen zweiten, β-Abschnitt, der an den Schaft angrenzt, unterteilt ist, wobei der α-Abschnitt parabolische Schneidkehlen (42a, 42b, 42c) sind und der β-Abschnitt Seitenschneidkehlen (44) sind, die einen festen Verjüngungswinkel zum Schneiden eines geradlinigen Eingangswegs in den Kanal hinter der Führungsspitze haben;
wobei die Führungsspitze (41a, 41b, 41c) sich vom Ende des α-Abschnitts nach vorn erstreckt, um dem Wurzelkanal beim Einsetzen des Bohrers zum Formen des Kanals zu folgen.

2. Zugangsbohrer nach Anspruch 1, wobei der Bohrer (40) aus starrem nichtrostendem Stahl hergestellt ist.

3. Zugangsbohrer nach Anspruch 1, wobei der Bohrer (40) aus starrem Kohlenstoffstahl hergestellt ist.

4. Zugangsbohrer nach einem der Ansprüche 1 bis 3, wobei die genannte Führungsspitze (41a, 41b, 41c) eine glatte Oberfläche aufweist, um den Eintritt in einen Wurzelkanal ohne Stufenbildung in ihm zu ermöglichen.

5. Zugangsbohrer nach Anspruch 4, wobei die genannte Führungsspitze (41a, 41b, 41c) halbkugelförmig ist.

6. Zugangsbohrer nach einem der vorhergehenden Ansprüche, wobei das kontinuierlich sich verjüngende Profil des α-Abschnitts (42a, 42b, 42c) die Form einer Parabel hat.

7. Zugangsbohrer nach einem der vorhergehenden Ansprüche, wobei der genannte Materialabtragteil wenigstens eine Spiralschneidkante hat.

8. Zugangsbohrer nach einem Ansprüche 1 bis 7, wobei der genannte Materialabtragteil wenigstens eine abrasive Oberfläche hat.

9. Zugangsbohrersatz (40a, 40b, 40c) zur Verwendung bei der Vorbereitung eines Wurzelkanals, der mehrere Zugangsbohrer nach einem der Ansprüche 1 bis 8 aufweist.

10. Zugangsbohrersatz (40a, 40b, 40c) nach Anspruch 9, wobei die Zahl der Bohrer in dem genannten Satz drei ist.

11. Zugangsbohrersatz (40a, 40b, 40c) nach Anspruch 9 oder 10, wobei jeder Bohrer in dem genannten Satz (40a, 40b, 40c) ein α-Abschnitt-Verjüngungsprofil hat, das von dem Verjüngungsprofil des α-Abschnitts der anderen Bohrer in dem genannten Satz verschieden ist.

## Revendications

1. Fraise dentaire d'accès (40) à utiliser pour couper un canal de racine dans des directions apicales et latérales, ladite fraise dentaire comprenant :
une queue arrondie ayant un premier diamètre ; et
une pointe pilote (41 a, 41 b, 41 c) à une extrémité de la fraise dentaire éloignée de ladite queue, ladite pointe pilote (41 a, 41 b, 41 c) ayant un deuxième diamètre qui est plus petit que ledit premier diamètre ;
**caractérisée par** :
une partie cannelée diminuée s'étendant entre ladite pointe pilote (41a, 41b, 41c) et ladite queue, la partie cannelée diminuée sous-divisée en une première section, α, adjacente à la pointe pilote et une deuxième section, β, adjacente à la queue, la section α étant des cannelures de coupe parabolique (42a, 42b, 42c) et la section β étant des cannelures de coupe latérale (44) ayant un angle de conicité fixe pour couper un chemin d'entrée en ligne droite dans le canal derrière la pointe pilote ;
dans laquelle la pointe pilote (41a, 41b, 41c) s'étend vers l'avant depuis l'extrémité de la section α pour suivre le canal de racine au fur et à mesure que la fraise dentaire est introduite pour façonner le canal.

2. Fraise dentaire d'accès selon la revendication 1, où la fraise (40) est fabriquée en acier inoxydable rigide.

3. Fraise dentaire d'accès selon la revendication 1, où la fraise (40) est fabriquée en acier au carbone rigide.

4. Fraise dentaire d'accès selon l'une quelconque des revendications 1 à 3, dans laquelle ladite pointe pilote (41 a, 41 b, 41 c) présente une surface lisse afin de faciliter l'entrée dans un canal de racine sans formation d'épaulement dedans.

5. Fraise dentaire d'accès selon la revendication 4, dans laquelle ladite pointe pilote (41 a, 41 b, 41 c) est hémisphérique.

6. Fraise dentaire d'accès selon l'une quelconque des revendications précédentes, dans laquelle le profil diminuant continuellement de la section α (42a, 42b, 42c) est en forme d'une parabole.

7. Fraise dentaire d'accès selon l'une quelconque des revendications précédentes, dans laquelle ladite partie d'enlèvement de matière a au moins un bord de coupe en spirale.

8. Fraise dentaire d'accès selon l'une quelconque des revendications 1 à 7, dans laquelle ladite partie d'enlèvement de matière a au moins une surface abrasive.

9. Jeu de fraises dentaires d'accès (40a, 40b, 40c) à utiliser pour préparer un canal de racine comprenant une pluralité de fraises dentaires d'accès selon l'une quelconque des revendications 1 à 8.

10. Jeu de fraises dentaires d'accès (40a, 40b, 40c) selon la revendication 9, dans lequel le nombre de fraises dentaires dans ledit jeu est de trois.

11. Jeu de fraises dentaires d'accès (40a, 40b, 40c) selon la revendication 9 ou 10, dans lequel chaque fraise dentaire dans ledit jeu (40a, 40b, 40c) a un profil de conicité de section α différent du profil de conicité des autres fraises dentaires dans ledit jeu.
